# EUROPEAN PATENT APPLICATION

(11) **EP 1 736 919 A1**
(43) Date of publication of application: **27.12.2006**
(21) Application number: 06011283.6
(22) Date of filing: 31.05.2006
(51) Int. Cl.: G06Q 10/00, H04L 12/18

(54) **Status informant terminal, information registration management server, information registration management method, information registration management system and program, available to presence server system**

(30) Priority: 07.06.2005 JP 2005167074
(71) Applicant: NEC Corporation, Minato-ku Tokyo (JP)
(72) Inventor: Takeuchi, Shohei, Minato-ku Tokyo 108-8001 (JP)
(74) Representative: Glawe, Delfs, Moll

(57) **Abstract**

When a registration information reception unit receives third party information, third party identification information, and item information from a registrant terminal, the registration information reception unit outputs the third party identification information to a registrant management unit and outputs the item information to a public presence item management unit. The registrant management unit and the public presence item management unit determine whether the third party information is to be stored in the presence information management unit in accordance with the a forecasted information. The registration information reception unit outputs the third party information and the item information to the information registration unit and stores the third party information in the presence information management unit as presence information of the status informant of the item of the item information when the registrant management unit and the public presence item management unit determine that the third party information is to be stored in the presence information management unit.

## Description

### BACKGROUND OF THE INVENTION

### 1. Field of the Invention

The present invention relates to a status informant terminal, an information registration management server, an information registration management method, an information registration management system, and a program, and more particularly, relates to a status informant terminal, an information registration management server, an information registration management method, an information registration management system, and a program, available to a presence service system.

### 2. Description of the Related Art

Conventionally, there is known a presence service system for managing statuses of users.

The presence service system includes a status informant terminal and a supervisor terminal. The status informant terminal stores presence information (status information) provided by a status informant. The supervisor terminal acquires the presence information stored in the status informant terminal to be monitored, by using a buddy list indicating the status informant terminal to be monitored.

Further, as a presence service system, there is known a centralized management scheme using a presence server and a distributed management scheme using no presence server.

Japanese Patent Laid-Open No. 2002-74164 discloses a presence service system in which a supervisor terminal accepts presence information and advertisements from the status informant terminal. Incidentally, the advertisements are set by the status informant.

In the conventional presence service system, the status informant terminal stores only the presence information that is provided by the status informant. Therefore, the status informant terminal provides only presence information that can be provided by the status informant.

Accordingly, there are limitations on the uses of the presence service system. Specifically, the presence service system is used only when information is exchanged among interested parties.

Recently, in order to expand the uses of the presence service, it is desirable to enhance functions of the presence service system.

### SUMMARY OF THE INVENTION

Accordingly, it is an object of the present invention to provide a status informant terminal, an information registration management server, an information registration management method, an information registration management system, and a program that can expand the uses of the presence service system.

To achieve the above object, the status informant terminal according to the present invention is connected to a registrant terminal. The status informant terminal includes an information management unit, an information reception unit, and an information registration unit.

The registrant terminal provides presence information that is related to the status informant. The registrant terminal is used by a registrant who is different from the status informant. The information reception unit receives the presence information from the registrant terminal. The information registration unit stores the presence information in the information management unit when the information reception unit receives the presence information.

Also, the information registration management server according to the present invention is connected to an information management unit and a registrant terminal. The information registration management server includes an information reception unit and an information registration unit.

The registrant terminal provides presence information that is related to the status informant. The registrant terminal is used by a registrant who is different from the status informant. The information reception unit receives the presence information from the registrant terminal. The information registration unit stores the presence information in the information management unit when the information reception unit receives the presence information.

Also, the information registration management system according to the present invention includes a status informant terminal for storing presence information of a status informant, and a registrant terminal.

The registrant terminal is connected to the status informant terminal. The registrant terminal provides the presence information. The registrant terminal is used by a registrant who is different from the status informant.

The status informant terminal includes an information management unit, an information reception unit, and an information registration unit. The information reception unit receives the presence information from the registrant terminal. The information registration unit stores the presence information in the information management unit when the information reception unit receives the presence information.

Also, the information registration management system according to the present invention includes a status informant terminal for storing presence information of a status informant, a registrant terminal, and a presence information registration server.

The registrant terminal provides the presence information and is used by a registrant who is different from the status informant.

The presence information registration server is connected to the status informant terminal and the registrant terminal. The presence information registration server includes an information reception unit and an information registration unit.

The information reception receives the presence information from the registrant terminal.

The information registration unit stores the presence information in the information management unit when the information reception unit receives the presence information.

According to the present invention, when the registrant terminal provides the presence information, the presence information is stored in the information management unit.

Therefore, even if the registrant terminal provides information that is provided by a third party who is different from the statue informant, as the presence information that is related to the status informant, the information is stored as the presence information related to the status informant. Accordingly, the presence information of the status informant is not limited to information that can be provided by the status informant.

Therefore, when the presence service system includes the status informant terminal or the information registration management server, the uses of the presence service system can be expanded. For example, the presence system can be used as a system that manages information that is provided by a third party as information of the status informant and informs interested persons of the information.

It is desirable that the status informant terminal be as follows.

The status informant terminal further includes a determination unit for determining whether to store the presence information, which is received by the information reception unit, in the information management unit. The information registration unit stores the presence information in the information management unit when the determination unit determines that the presence information is to be stored in the information management unit.

According to the present invention, it is possible to restrict the presence information from being stored in the status informant terminal. Therefore, unnecessary presence information can be prevented from being stored.

It is desirable that the status informant terminal be as follows.

The registrant terminal further provides user identification information that is used to identify a user of the registrant terminal. The information reception unit further receives the user identification information. The determination unit includes a registrant management unit for determining whether to store the presence information in the information management unit in accordance with the user identification information received by the information reception unit.

According to the present invention, it is possible to restrict a person who can store presence information in the status informant terminal. Therefore, presence information can be prevented from being registered by a third party who has no registration authority.

It is desirable that the status informant terminal be as follows.

The information management unit stores presence information item by item. The registrant terminal further provides item information that indicates items having presence information. The information reception unit further receives the item information.

The determination unit includes an item management unit for determining whether to store the presence information in the information management unit in accordance with the item information that is received by the information reception unit.

The information registration unit stores the presence information as the presence information of the item that is indicated by the item information when the item management unit determines that the presence information is to be stored in the information management unit.

According to the present information, it is possible to restrict items of presence information that are to be stored. Therefore, only presence information of specific items can be received from the registrant terminal.

Preferably, the determination unit may include a data content information management unit for determining whether to store the presence information in the information management unit in accordance with contents that are indicated by the presence information that is received by the information reception unit.

According to the present invention, it is possible to restrict contents that are to be stored as the presence information of the status informant. Therefore, presence information of undesirable contents can be prevented from being stored as the presence information of the status informant.

Preferably, the determination unit may include a registration information management unit for determining whether to use the presence information in the information management unit in accordance with the presence information that is stored in the information management unit.

According to the present invention, for example, when the presence information that is stored in the status informant terminal is important information, the important information can be prevented from being updated.

It is desirable that the status informant terminal operate as follows.

The information management unit stores the presence information item by item. The registrant terminal can further provide item information, which indicates items having the presence information, and user identification information to identify a user of the registrant terminal. The information reception unit can further receive the item information and the user identification information.

The determination unit freely combines the determination whether to store the presence information in accordance with the user identification information that is received, the determination whether to store the presence information in accordance with the item information that is received, the determination whether to store the presence information in accordance with the contents of the presence information that is received, and the determination whether to store the presence information in accordance with the presence information that is stored. The determination unit determines whether to store the presence information in accordance with the combined determinations.

According to the present invention, it is possible to more appropriately determine whether to store the presence information in the information management unit.

The above and other objects, features, and advantages of the present invention will become apparent from the following description with reference to the accompanying drawings which illustrate an example of the present invention.

### BRIEF DESCRIPTION OF THE DRAWINGS

Fig. 1 is a block diagram of a presence service system according to a first embodiment of the present invention;
Fig. 2 is a block diagram of a presence service system according to a second embodiment of the present invention;
Fig. 3 is a block diagram of a presence service system according to a third embodiment of the present invention;
Fig. 4 is a block diagram of a presence service system according to a fourth embodiment of the present invention;
Fig. 5 is a block diagram of a presence service system according to a fifth embodiment of the present invention; and
Fig. 6 is a block diagram of a presence service system according to another embodiment of the present invention.

### DESCRIPTION OF THE PREFERRED EMBODIMENTS

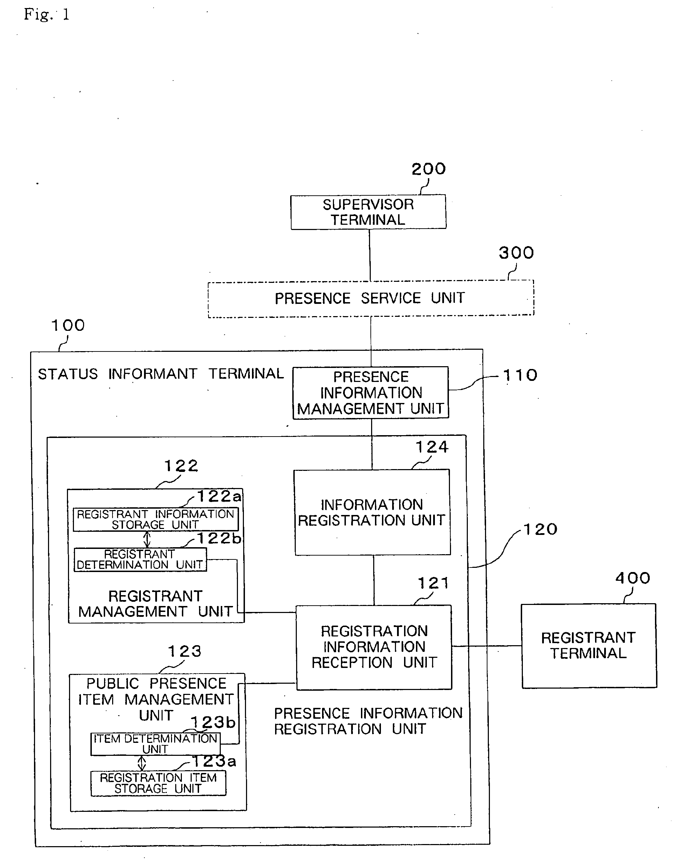

Fig. 1 shows a block diagram of a presence service system including a status informant terminal according to the first embodiment of the present invention.

In Fig. 1, the presence service system includes status informant terminal (hereinafter, simply called terminal) 100, supervisor terminal (hereinafter, simply called terminal) 200, presence service unit 300, and registrant terminal (hereinafter, simply called terminal) 400.

Terminal 100 includes presence information management unit (hereinafter, simply called management unit) 110 and presence information registration unit (hereinafter, simply called registration unit) 120. Registration unit 120 includes registration information reception unit (hereinafter, simply called reception unit) 121, registrant management unit (hereinafter, simply called management unit) 122, public presence item management unit (hereinafter, simply called management unit) 123, and information registration unit (hereinafter, simply called registration unit) 124.

Terminal 100 is directly or indirectly connected to terminal 200 and is directly or indirectly connected to terminal 400.

Terminal 100, for example, is a computer. Terminal 100 is used by a status informant (presentity). When terminal 100 receives presence information (status information) from the status informant, terminal 100 stores the presence information in management unit 110.

In the first embodiment, when terminal 100 receives the presence information of the status informant item by item from the status informant, terminal 100 stores the presence information in management unit 110 item by item.

Terminal 200, for example, is a computer. Terminal 200 is used by a supervisor (watcher). Terminal 200 acquires the presence information, which is stored in terminal 100 which is to be monitored, using a buddy list that indicates status informant terminals that are to be monitored.

Presence service unit 300 gives terminal 200 the presence information that is stored in terminal 100 which is indicated by the buddy list of terminal 200.

Additionally, when the presence service system is of a centralized management scheme using a presence server, presence service unit 300 is the presence server.

On the other hand, when the presence service system is of a distributed management scheme using no presence server, the functions of presence service unit 300 are distributed to terminal 100 and terminal 200.

Terminal 400, for example, is a computer. Terminal 400 is used by a third party (registrant) who is different from the status informant. Terminal 400 gives terminal 100 the third party information that is provided by the third party (the presence information that is related to the status informant).

Further, in the first embodiment, terminal 400 provides a registration request for terminal 100. The registration request includes the third party information, third party identification information (user identification information) that is used to identify third parties, and item information that indicates items having the presence information of the status informant.

Management unit 110 stores the presence information of the status informant item by item. When registration unit 120 receives the third party information from terminal 400, registration unit 120 stores the third party information in management unit 110 as the presence information of the status informant.

Reception unit 121 receives the registration request from terminal 400.

Reception unit 121 provides the third party identification information that is included in the registration request to management unit 122 and provides item information that is included in the registration request to management unit 123.

When management unit 122 receives the third party identification information, management unit 122 determines whether to store the third party information in management unit 110 in accordance with the third party identification information.

Specifically, management unit 122 determines whether to allow the third party identified by the third party identification information to store the third party information as the presence information of the status informant.

For example, management unit 122 includes registrant information storage unit (hereinafter, simply called storage unit) 122a and registrant determination unit 122b. Storage unit 122a stores registrant information that indicates a third party that is authorized to store the third party information as the presence information of the status informant.

Registrant determination unit 122b determines whether or not the third party identified by the third party identification information is authorized to store the third party information as the presence information of the status informant in accordance with the third party identification information and the registrant information that is stored in storage unit 122a.

In other words, registrant determination unit 122b determines whether to store the third party information in management unit 110 in accordance with the third party identification information and the registrant information that is stored in storage unit 122a.

Specifically, registrant determination unit 122b determines that the third party information should be stored in management unit 110 when the third party identification information is stored in storage unit 122a as the registrant information. On the other hand, registrant determination unit 122b determines that the third party information should not be stored in management unit 110 when no third party identification information is stored in storage unit 122a as the registrant information. Registrant determination unit 122b provides the determination result to reception unit 121.

When management unit 123 receives the item information, management unit 123 determines whether to store the third party information in management unit 110 in accordance with the item information.

Specifically, management unit 123 determines whether it is allowable to store the third party information as the presence information of the status informant of the item that is indicated by the item information.

For example, management unit 123 includes registration item storage unit (hereinafter, simply called storage unit) 123a and item determination unit 123b.

Storage unit 123a stores the registration item information indicating items that are authorized to store the third party information as the presence information of the status informant.

Item determination unit 123b determines whether it is allowable to store the third party information as the presence information of the status informant of the item that is indicated by the item information in accordance with the item information and the registration item information in storage unit 123a.

In other words, item determination unit 123b determines whether to store the third party information in management unit 110 in accordance with the item information and the registration item information.

Specifically, item determination unit 123b determines that the third party information is to be stored in management unit 110 when the item information is stored in storage unit 123a as the registration item information.

On the other hand, item determination unit 123b determines that the third party information is not to be stored in management unit 110 when no item information is stored in storage unit 123a as the registration item information.

Item determination unit 123b provides the determination result for reception unit 121.

When reception unit 121 receives the determination results, which indicates that the third party information is to be stored in management unit 110, from management unit 122 and management unit 123, reception unit 121 provides the third party information and the item information for registration unit 124.

When registration unit 124 receives the third party information and the item information from reception unit 121, registration unit 124 stores the third party information in management unit 110 as the presence information of the status informant of the item indicated by the item information.

Next, the operation is explained.

When reception unit 121 receives a registration request from terminal 400, reception unit 121 provides the third party identification information, which is included in the registration request, for management unit 122 and provides the item information that is included in the registration request for management unit 123.

When registrant determination unit 122b in management unit 122 receives the third party identification information, registrant determination unit 122b determines whether or not the third party identification information is stored in storage unit 122a as the registrant information.

Registrant determination unit 122b determines that the third party information is to be stored in management unit 110 when the third party information is stored in storage unit 123a as the registrant information. On the other hand, registrant determination unit 123b determines that the third party information is not to be stored in management unit 110 when no third party information is stored in storage unit 122a as the registrant information.

Management unit 122 provides the determination result for reception unit 121.

On the other hand, when item determination unit 123b in management unit 123 receives the item information, item determination unit 123b determines whether or not the item information is stored in storage unit 123 as the registration item information.

Item determination unit 123b determines that the third party information is to stored in management unit 110 when the item information is stored in storage unit 123a as the registration tem information. On the other hand, item determination unit 123b determines that the third party information is not to be stored in management unit 110 when no item information is stored in storage unit 123a as the registration item information.

Management unit 123 provides the determination result for reception unit 121.

When reception unit 121 receives the determination results, which indicates that the third party information is to be stored in management unit 110, from management unit 122 and management unit 123, reception unit 121 provides the third party information and the item information for registration unit 124.

When registration unit 124 receives the third party information and the item information from reception unit 121, registration unit 124 stores the third party information in management unit 110 as the presence information of the status informant of the item indicated by the item information.

The third party information that is stored in management unit 110 is informed to terminal 200 by presence service unit 300 as the presence information of the status informant.

According to the first embodiment, the information that is provided from terminal 400 is stored in management unit 110 of terminal 100 as the presence information of the status informant.

Therefore, even if terminal 400 provides the information, which is provided from the third party who is different from the status informant, for terminal 100, the information is stored as the presence information that is related to the status informant. As a result, the information, which is stored in terminal 100 as the presence information of the status informant, is not limited to information that can be provided by the status informant.

Therefore, when the presence service system includes terminal 100, the uses of the presence service system can be expanded.

For example, the presence service system including terminal 100 can be used as a system for informing statuses of a plurality of restaurants.

Specifically, first, a manager of "restaurant mall" arranges terminal 100, which is used to inform statuses of "restaurant mall", in the presence service system.

Then, the manager of "restaurant mall" assigns each item in the presence information of "restaurant mall" to each restaurant that is included in "restaurant mall".

A manger of each restaurant registers a crowded condition and the service situation of the manager's restaurant in management unit 100 though terminal 400 as the presence information of the item that is assigned to him/her.

In this case, the supervisor monitors only one status informant, i.e., "restaurant mall", thereby monitoring statuses of all restaurants included in the restaurant mall.

Incidentally, in the conventional presence service, in order to monitor statuses of all restaurants, the supervisor had to set all restaurants as objects to be monitored. Therefore, the supervisor had to accurately specify all restaurants as objects to be monitored.

However, according to the first embodiment, by monitoring only "restaurant mall", which is a single object to be monitored, the supervisor can obtain much information.

Also, when the manager of "restaurant mall" adds or deletes the presence items, as appropriate, it is possible to easily manage the presence items (in this case, restaurants) that are to be informed to the supervisor.

Further, according to the first embodiment, management unit 122 and management unit 123, i.e., the determination units determine whether or not the third party information that is received by reception unit 121 is to be stored in management unit 110. Registration unit 124 stores the third party information in management unit 110 when the determination unit determines that the third party information is to be stored in management unit 110.

In this case, the third party information to be stored as the presence information of the status informant can be restricted. Therefore, unnecessary third party information is prevented from being stored as the presence information of the status informant.

Also, according to the first embodiment, management unit 122 determines whether the third party information is to be stored in management unit 110 in accordance with the third party identification information that is received by reception unit 121.

In this case, it is possible to restrict the third party who can store the third party information as the presence information of the status informant. Therefore, a third party who has no registration authority is prevented from registering presence information of a status informant.

Also, according to the first embodiment, management unit 123 determines whether or not the third party information is to be stored in management unit 110 in accordance with the item information received by reception unit 121.

In this case, it is possible to restrict items of the third party information that are to be stored as the presence information of the status informant. Therefore, only presence information of specific items can be received from terminal 400.

Also, according to the first embodiment, registration unit 124 stores the third party information in management unit 110 when management unit 122 and management unit 123 determine that the third party information is to be stored in management unit 110.

In this case, it is determined whether or not the third party information is to be stored in management unit 110 in accordance with the plurality of kinds of determination results. Therefore, the accuracy of determination can be improved.

Incidentally, registration unit 120 may include only management unit 122 or management unit 123 as the determination unit, and reception unit 121 may register the third party information and the item information in information registration unit 110 when the determination unit determines that the third party information is to be stored in management unit 110.

Next, the second embodiment of the present invention will be explained.

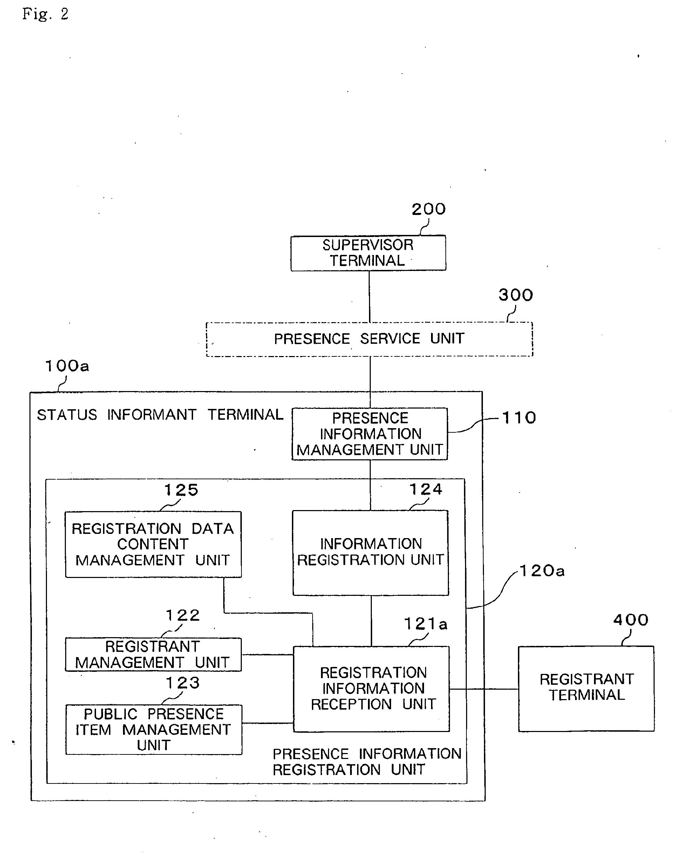

Figure 2 is a block diagram showing a presence service system that includes a status informant terminal according to the second embodiment. Incidentally, in Fig. 2, the same reference numerals are applied to the same units as Fig. 1.

In the second embodiment, registration data content management unit (hereinafter, simply called management unit) 125 is added to the first embodiment.

Hereinafter, the second embodiment is explained with emphasis on differences from the first embodiment.

Terminal 100a includes management unit 110 and registration unit 120a.

Registration unit 120a includes reception unit 121 a, management unit 122, management unit 123, registration unit 124, and management unit 125.

When reception unit 121a receives a registration request from terminal 400, reception unit 121 a provides the third party information, which is included in the registration request, for management unit 122, provides the item information, which is included in the registration request, for management unit 123, and provides the third party information, which is included in the registration request, for management unit 125.

When management unit 125 receives the third party information, management unit 125 determines whether or not the third party information is to be stored in management unit 110 in accordance with contents that are indicated by the third party information. For example, management unit 125 includes a determination condition storage unit (not shown) and a content determination unit (not shown).

The determination condition storage unit stores a predetermined word.

The content determination unit determines that the third party information is to be stored in management unit 110 when the third party information that is received from reception unit 121 a includes the predetermined word that is stored in the determination condition storage unit. On the other hand, the content determination unit determines that the third party information is not to be stored in management unit 110 when the third party information includes no predetermined word.

Management unit 125 provides the determination result for reception unit 121a.

When reception unit 121a receives the determination results indicating that the third party information is to be stored in management unit 110 from management unit 122, management unit 123, and management unit 125, reception unit 121 a informs registration unit 124 of the third information and the item information.

According to the second embodiment, management unit 125 determines whether or not the third party information is to be stored in management unit 110 in accordance with the contents that are indicated by the third party information.

In this case, it is possible to restrict contents that are to be stored as presence information of the status informant. Therefore, third party information including undesirable contents is prevented from being stored as the presence information.

Incidentally, registration unit 120a may include only one or two unit from among management unit 122, management unit 123, and management unit 125 as the determination unit, and reception unit 121a may provide the third party information and the item information for information registration unit 110 when the determination unit determines that the third party information is to be stored in management unit 110.

Next, the third embodiment of the present invention will be explained.

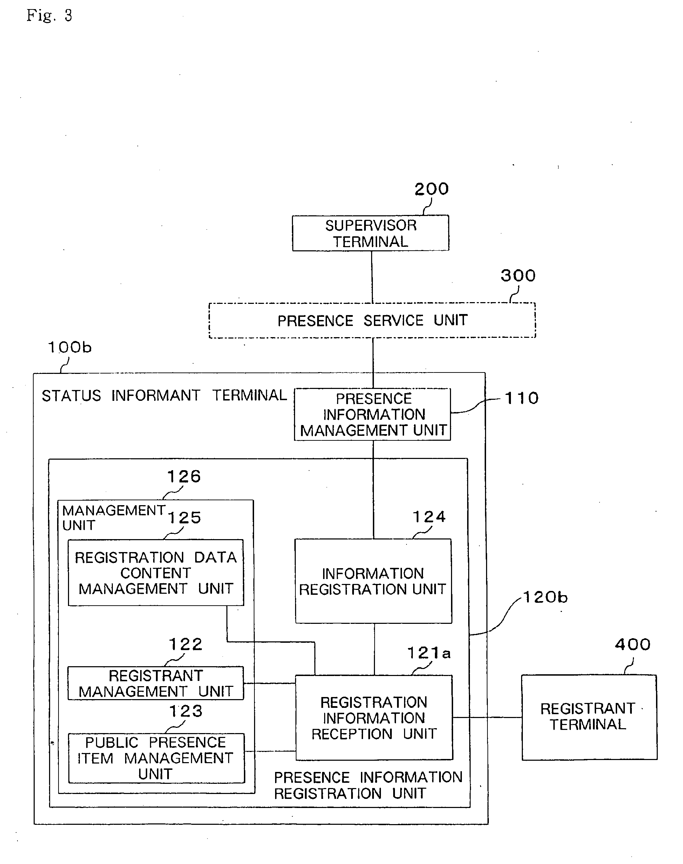

Figure 3 is a block diagram showing a presence service system including a status informant terminal according to the third embodiment. Incidentally, in Fig. 3, the same reference numerals are applied to the same units as Fig. 2.

Management unit 126 is provided in the third embodiment.

Management unit 126 comprises management unit 122, management unit 123, and management unit 125 according to the second embodiment.

Hereinafter, the third embodiment will be explained with emphasis on differences from the second embodiment.

Terminal 100b includes management unit 110 and registration unit 120b. Registration unit 120b includes reception unit 121a, registration unit 124, and management unit 126. Management unit 126 includes management unit 122, management unit 123, and management unit 125.

Management unit 126 combines management unit 122, management unit 123 and management unit 125 in accordance with, for example, an integration command that is set by the manager, as appropriate, to generate a determination unit, and provides the determination result of the determination unit for reception unit 121 a.

Reception unit 121a provides the third party information and the item information for information registration unit 110 when the determination unit determines that the third party information is to be stored in management unit 110.

Therefore, according to the third embodiment, determination can be made in further detail.

Incidentally, a combination of integrations is not limited, and management unit 122 and management unit 123 may be combined or management unit 122 and management unit 125 may be combined.

Next, the fourth embodiment of the present invention will be explained.

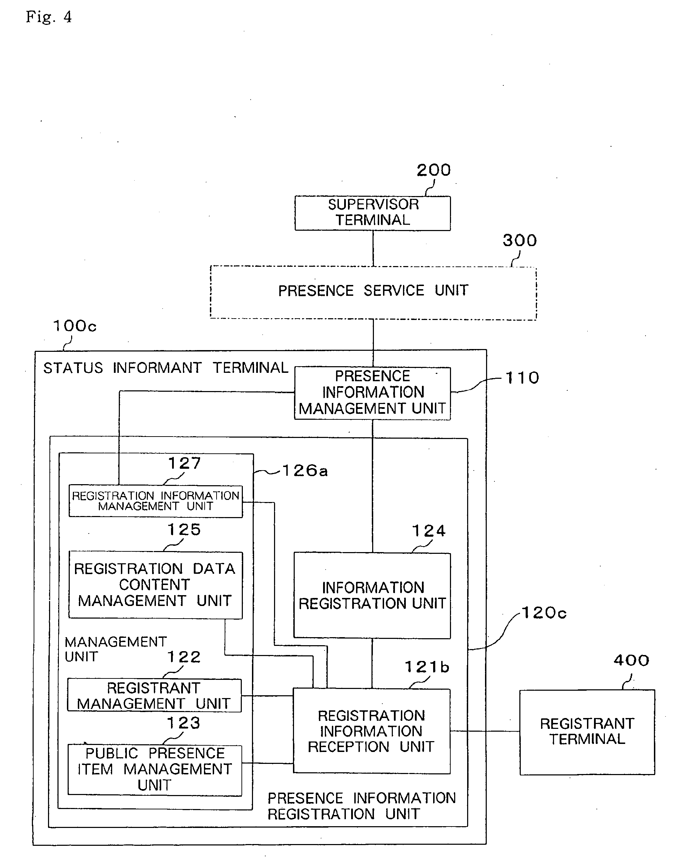

Figure 4 is a block diagram showing a presence service system including a status informant terminal according to the fourth embodiment. Incidentally, in Fig. 4, the same reference numerals are applied to the same units as Fig. 3.

In the fourth embodiment, registration information management unit (hereinafter, simply called management unit) 127 is added to the third embodiment.

Hereinafter, the fourth embodiment will be explained with emphasis on differences from the third embodiment.

Terminal 100c includes management unit 110 and registration unit 120c. Registration unit 120c includes reception unit 121 b, registration unit 124, and management unit 126a. Management unit 126a includes management unit 122, management unit 123, management unit 125, and management unit 127.

When reception unit 121 b receives a registration request from terminal 400, reception unit 121b provides the third party identification information that is included in the registration request for management unit 122, provides the item information that is included in the registration request for management unit 123 and management unit 127, and provides the third party information that is included in the registration request for management unit 125.

When management unit 127 receives the item information, management unit 127 determines whether or not the third party information is to be stored in management unit 110 in accordance with the presence information of the status informant that is stored in management unit 110.

For example, management unit 127 determines that the third party information is not to be stored in management unit 110 when the presence information indicating important information is stored in management unit 110 as the presence information of the status informant. On the other hand, management unit 127 determines that the third party information is to be stored in management unit 110 when no presence information indicating important information is stored in management unit 110 as the presence information of the status informant.

Management unit 127 provides the determination result for reception unit 121 b.

Management unit 126a combines management unit 122, management unit 123, management unit 125, and management unit 127 in accordance with, for example, an integration command set by the manager, as appropriate, to establish the determination unit, and provides the determination result of the determination unit for reception unit 121 a.

Reception unit 121 b registers the third party information and the item information in management unit 110 when the determination unit determines that the third party information is to be stored in management unit 110.

Therefore, in the fourth embodiment, determination can be made in further detail. Incidentally, a combination of integrations is free.

According to the fourth embodiment, management unit 127 determines whether or not the third party information is to be stored in management unit 110 in accordance with the presence information of the status informant that is stored in management unit 110.

In this case, for example, when the presence information of the status informant stored in management unit 110 is important information, the important information is prevented from being updated by the third party information.

Also, in the fourth embodiment, management unit 126a freely combines the determination whether the third party information is to be stored in accordance with the third party identification information, the determination whether the third party information is to be stored in accordance with the item information, the determination whether the third party information is to be stored in accordance with contents indicated by the third party information, and the determination whether the third party information is to be stored in accordance with the presence information of the status informant. Management unit 126a determines whether the third party information is to be stored based on the combined determination results.

Registration unit 124 stores the third party information in management unit 110 when management unit 126a determines that the third party information is to be stored in management unit 110. In this case, determination can be made in further detail.

Next, the fifth embodiment of the present invention will be explained.

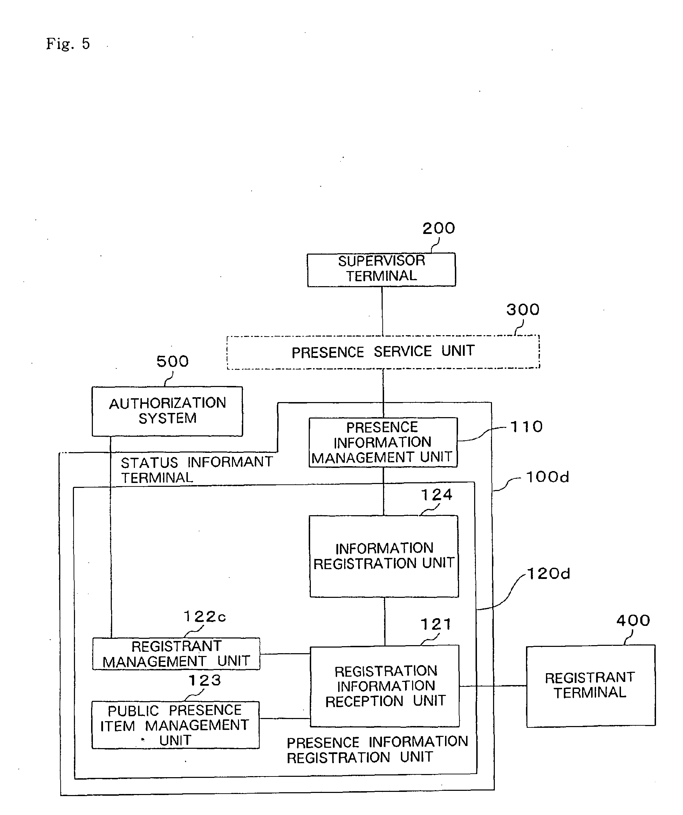

Figure 5 is a block diagram showing a presence service system including a status informant terminal according to the fifth embodiment. Incidentally, in Fig. 5, the same reference numerals are applied to the same units as in Fig. 1.

The fifth embodiment is different from the first embodiment in that management unit 122c is connected to external authorization system 500.

When management unit 122c receives the third party identification information, management unit 122c provides the third party information for authorization system 500.

When certification system 500 receives the third party identification information, certification system 500 confirms whether or not the third party identified by the third party identification information is previously registered as a presence information registrant, and provides the confirmation result for management unit 122c.

Management unit 122c determines that the third party information is to be stored in management unit 110 when the confirmation result of authorization system 500 indicates that the third party identified by the third party identification information is previously registered as the presence information registrant and when it is determined that the third party identified by the third party identification information is authorized to store the third party information as the presence information of the status informant.

In this case, the third party can receive stronger authorization. Incidentally, in the second to fourth embodiments, management unit 122c connected to authorization system 500 may be used instead of management unit 122.

Further, in each above-mentioned embodiment, the presence information registration unit is arranged in the status informant terminal. However, in each embodiment, the presence information registration unit is not arranged in the status informant terminal, but is independently connected to the status informant terminal and the registrant terminal as a presence information registration server.

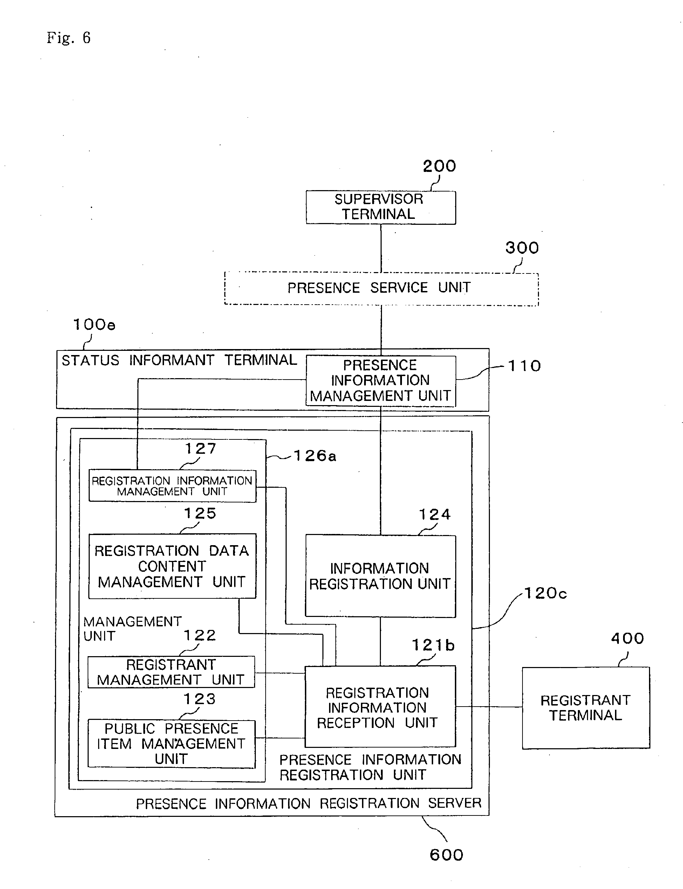

Figure 6 is a block diagram showing a presence service system in which registration unit 120c according to the fourth embodiment is arranged in presence information registration server (information registration management server) 600. Incidentally, in Fig. 6, the same reference numerals are applied to the same units as in Fig. 4. In this case, terminal 100e includes management unit 110.

Incidentally, the presence information registration unit arranged in presence information registration server 600 is not limited to registration unit 120c of the fourth embodiment; and registration unit 120 of the first embodiment, registration unit 120a of the second embodiment, registration unit 120b of the third embodiment, or registration unit 120d of the fifth embodiment are also available.

In each above-mentioned embodiment, authority to register a specific presence item of a status informant is available to the third party, and the third party registers the presence information of the available presence item. Therefore, the information that is provided from the third party is notified to the interested person (supervisor) as his/her presence information of the status informant.

Therefore, in each above-mentioned embodiment, the specific presence item of the status informant is available to the third party under appropriate management of the registration authority, and the third party is authorized to freely rewrite the presence information of the item.

In each embodiment, as above explained, the configuration shown in the drawing is just one example and there is no limitation on the configuration of the present invention.

For example, a computer may be used as each presence information registration unit. In this case, the computer reads a program that is stored in a storage medium, like a memory, not shown, and executes the program to carry out each function in the presence information registration unit. In this case, the computer can carry out each function in the presence information registration unit.

Additionally, each embodiment can be used, for example, in the following fields.
1. A real-time distribution service of public information
2. Advertisement distribution
   For example, among presence items of the "shopping mall", the item of daily special information is set as a presence item that is available for registration by third parties. Event information (daily special information) is notified to guests in the shopping mall in real time.
3. Integrated information distribution by a representative
   For example, among presence items of the "project leader", the project status and the conference information are registered as presence items that are available for registration by the third parties. The whole project status is shared by project members.

While a preferred embodiment of the present invention has been described using specific terms, such description is for illustrative purposes only, and it is to be understood that changes and variations may be made without departing from the spirit or scope of the following claims.

## Claims

1. A status informant terminal connected to a registrant terminal that provides presence information that is related to a status informant and is used by a registrant that is different from said status informant, said terminal comprising:
an information management unit;
an information reception unit for receiving said presence information from said registrant terminal; and
an information registration unit for storing said presence information in said information management unit when said information reception unit receives said presence information.

2. The status informant terminal according to Claim 1, further comprising:
a determination unit for determining whether the presence information received by said information reception unit is to be stored in said information management unit;
wherein said information registration unit stores said presence information in said information management unit when said determination unit determines that said presence information is to be stored in said information management unit.

3. The status informant terminal according to Claim 2, wherein said registrant terminal further provides user identification information to identify a user of said registrant terminal;
said information reception unit further receives said user identification information; and
said determination unit includes a registrant management unit for determining whether said presence information is to be stored in said information management unit in accordance with the user identification information received by said information reception unit.

4. The status informant terminal according to Claim 2, wherein said information registration management unit stores said presence information item by item;
said registrant terminal further provides item information indicating items of said presence information;
said information reception unit further receives said item information;
said determination unit includes an item management unit for determining whether said presence information is to be stored in said information management unit in accordance with the item information received by said information reception unit; and
said information registration unit stores said presence information in said information management unit as presence information of item indicated by said item information when said item management unit determines that said presence information is to be stored in said information management unit.

5. The status informant terminal according to Claim 2, wherein said determination unit includes a data content information management unit for determining whether said presence information is to be stored in said information management unit in accordance with contents indicated by the presence information received by said information reception unit.

6. The status informant terminal according to Claim 2, wherein said determination unit includes a registration information management unit for determining whether said presence information is to be stored in said information management unit in accordance with the presence information stored in said information management unit.

7. The status informant terminal according to Claim 2, wherein said information management unit stores said presence information item by item;
said registrant terminal further provides item information indicating items of said presence information and user identification information to identify a user of said registrant terminal;
said information reception unit further receives said item information and said user identification information; and
said determination unit freely combines determination whether said presence information is to be stored in accordance with the user identification information that is received, determination whether said presence information is to be stored in accordance with the item information that is received, determination whether said presence information is to be stored in accordance with the contents indicated by the presence information that is received, and determination whether said presence information is to be stored in accordance with the presence information that is stored, and determines whether said presence information is to be stored based on the combined determinations.

8. An information registration management method performed by a status informant terminal connected to a registrant terminal that outputs presence information related to a status informant and that is used by a registrant that is different from said status informant, said method comprising:
an information reception step of receiving said presence information from said registrant terminal; and
an information registration step of storing said presence information when said presence information is received.

9. The information registration management method according to Claim 8, further comprising:
a determination step of determining whether said presence information is to be stored;
wherein in said information registration step, said presence information is stored when it is determined that said presence information is to be stored.

10. The information registration management method according to Claim 9, wherein said registrant terminal further outputs user identification information to identify a user of said registrant terminal, said method further comprises a user identification information reception step of receiving said user identification information, and wherein, in said determination step, it is determined whether said presence information is to be stored in accordance with the user identification information that is received.

11. The information registration management method according to Claim 9, wherein said status informant terminal stores said presence information item by item; and said registrant terminal further outputs item information indicating items of said presence information, said method further comprises an item information reception step of receiving said item information,
wherein, in said determination step, it is determined whether said presence information is to be stored in accordance with the item information that is received; and in said information registration step, said presence information is stored as presence information of item indicated by said item information when it is determined that said presence information is to be stored.

12. The information registration management method according to Claim 9, wherein, in said determination step, it is determined whether said presence information is to be stored in accordance with contents indicated by the presence information that is received.

13. The information registration management method according to Claim 9, wherein, in said determination step, it is determined whether said presence information is to be stored in accordance with the presence information stored in said status informant terminal.

14. The information registration management method according to Claim 9, wherein said status informant terminal stores said presence information item by item;
said registrant terminal further outputs item information indicating items of said presence information and user identification information to identify a user of said registrant terminal;
in said reception step, said item information and said user identification information are further received; and
in said determination step, determination whether said presence information is to be stored in accordance with the user identification information that is received, determination whether said presence information is to be stored in accordance with the item information that is received, determination whether said presence information is to be stored in accordance with the contents indicated by the presence information that is received, and determination whether said presence information is to be stored in accordance with the presence information that is stored, are freely combined, and it is determined whether the presence information is to be stored based on the combined determinations.

15. An information registration management server connected to an information management unit and a registrant terminal which outputs presence information that is related to a status informant and which is used by a registrant that is different from said status informant, said server comprising:
an information reception unit for receiving said presence information from said registrant terminal; and
an information registration unit for storing said presence information in said information management unit when said information reception unit receives said presence information.

16. The information registration management server according to Claim 15, further comprising:
a determination unit for determining whether the presence information received by said information reception unit is to be stored in said information management unit;
wherein said information registration unit stores said presence information in said information management unit when said determination unit determines that said presence information is to be stored in said information management unit.

17. The information registration management server according to Claim 16, wherein said registrant terminal further outputs user identification information to identify a user of said registrant terminal;
said information reception unit further receives said user identification information; and
said determination unit includes a registrant management unit for determining whether said presence information is to be stored in said information management unit in accordance with the user identification information received by said information reception unit.

18. The information registration management server according to Claim 16, wherein said information management unit stores said presence information item by item;
said registrant terminal further outputs item information indicating items of said presence information;
said information reception unit further receives said item information,
said determination unit includes an item management unit for determining whether said presence information is to be stored in said information management unit in accordance with the item information received by said information reception unit; and
said information registration unit stores said presence information in said information management unit as presence information of item indicated by said item information when said item management unit determines that said presence information is to be stored in said information management unit.

19. The information registration management server according to Claim 16, wherein said determination unit includes a data content information management unit for determining whether said presence information is to be stored in said information management unit in accordance with contents indicated by the presence information received by said information reception unit.

20. The information registration management server according to Claim 16, wherein said determination unit includes a registration information management unit for determining whether said presence information is to be stored in said information management unit in accordance with the presence information stored in said information management unit.

21. The information registration management server according to Claim 16, wherein said information management unit stores said presence information item by item;
said registrant terminal further provides item information indicating items of said presence information and user identification information to identify a user of said registrant terminal;
said information reception unit further receives said item information and said user identification information; and
said determination unit freely combines determination whether said presence information is to be stored in accordance with the user identification information that is received, determination whether said presence information is to be stored in accordance with the item information that is received, determination whether said presence information is to be stored in accordance with the contents indicated by the presence information that is received, and determination whether said presence information is to be stored in accordance with the presence information that is stored, and determines whether the presence information is to be stored based on the combined determinations.

22. An information registration management method performed by an information registration management server connected to an information management unit and a registrant terminal that outputs said presence information and that is used by a registrant that is different from said status informant, said method comprising:
an information reception step of receiving said presence information from said registrant terminal; and
an information registration step of storing said presence information in said information management unit when said presence information is received.

23. The information registration management method according to Claim 22, further comprising:
a determination step of determining whether said presence information is to be stored in said information management unit;
wherein, in said information registration step, said presence information is stored in said information management unit when it is determined that said presence information is to be stored in said information management unit.

24. The information registration management method according to Claim 23, wherein said registrant terminal further outputs user identification information to identify a user of said registrant terminal, said method further comprises a user identification information reception step of receiving said user identification information, and wherein, in said determination step, it is determined whether said presence information is to be stored in said information management unit in accordance with the user identification information that is received.

25. The information registration management method according to Claim 23, wherein said information management unit stores said presence information item by item; and said registrant terminal further outputs item information indicating items of said presence information, said method further comprises an item information reception step of receiving said item information,
wherein, in said determination step, it is determined whether said presence information is to be stored in said information management unit in accordance with the item information that is received; and in said information registration step, said presence information is stored as presence information of item indicated by said item information when it is determined that said presence information is to be stored in said information management unit.

26. The information registration management method according to Claim 23, wherein, in said determination step, it is determined whether said presence information is to be stored in said information management unit in accordance with contents indicated by the presence information that is received.

27. The information registration management method according to Claim 23, wherein, in said determination step, it is determined whether said presence information is to be stored in said information management unit in accordance with the presence information stored in said information management unit.

28. The information registration management method according to Claim 23, wherein said information management unit stores said presence information item by item;
said registrant terminal further outputs item information indicating items of said presence information and user identification information to identify a user of said registrant terminal;
in said reception step, said item information and said user identification information are further received; and
in said determination step, determination whether said presence information is to be stored in said information management unit in accordance with the user identification information that is received, determination whether said presence information is to be stored in said information management unit in accordance with the item information that is received, determination whether said presence information is to be stored in said information management unit in accordance with the contents indicated by the presence information that is received, and determination whether said presence information is to be stored in said information management unit in accordance with the presence information that is stored, are freely combined, and it is determined whether the presence information is to be stored in said information management unit based on the combined determinations.

29. A program making a computer execute an information registration management process, said computer connected to an information management unit and a registrant terminal that provides presence information of a status informant and that is used by a registrant that is different from said status informant, said information registration management process comprising:
an information reception process of receiving said presence information from said registrant terminal; and
an information registration process of storing said presence information in said information management unit when said presence information is received.

30. An information registration management system including a status informant terminal and a registrant terminal that is connected to said status informant terminal, that provides presence information of a status informant, and that is used by a registrant that is different from said status informant,
wherein said status informant terminal comprises:
an information management unit;
an information reception unit for receiving said presence information from said registrant terminal; and
an information registration unit for storing said presence information in said information management unit when said information reception unit receives said presence information.

31. An information registration management system including a status informant terminal, a registrant terminal that provides presence information of a status informant and that is used by a registrant that is different from said status informant, and a presence information registration management server connected to said status informant terminal and said registrant terminal,
wherein said presence information registration management server comprises:
an information reception unit for receiving said presence information from said resistant terminal; and
an information registration unit for storing said presence information in said status informant terminal when said information reception unit receives said presence information.
